# FASCICULE DE BREVET EUROPEEN

(11) **EP 0 491 630 B1**
(45) Date de publication et mention de la délivrance du brevet: **27.03.1996**
(21) Numéro de dépôt: 91420426.8
(22) Date de dépôt: 03.12.1991
(51) Int. Cl.: B29C 43/12, B29C 43/02

(54) **Procédé de moulage sous vide d'un panneau en matériau plastique et panneau obtenu selon le procédé**
Verfahren zum Vakuumgiessformen einer Platte aus Kunststoff und so hergestellte Platte
Process for moulding under vacuum a panel in plastic and a panel so obtained

(30) Priorité: 18.12.1990 FR 9016205
(43) Date de publication de la demande: 24.06.1992
(73) Titulaire: ENTRE-PRISES, F-38660 Le Touvet (FR)
(72) Inventeur: Savigny, François, F-38660 Le Touvet (FR)
(74) Mandataire: Hecké, Gérard

(56) Documents cités:
- DE-A- 2 422 616
- FR-A- 2 073 673
- FR-A- 2 335 664
- GB-A- 1 035 360
- GB-A- 2 167 014
- US-A- 3 616 057
- US-A- 3 787 546
- US-A- 4 312 829
- US-A- 4 487 730
- PATENT ABSTRACTS OF JAPAN vol. 14, no. 071 (M-933)9 Février 1990 & JP-A-12 90 419(TOYO LINOLEUM CO.LTD) 22 Novembre 1989
- Week 8317, 23 Juin 1983 Derwent Publications Ltd., London, GB; AN 83-41082(17) & SU-A-937 102 (EXTRAMURAL POLY, CASTING PROD. TECH.) 23 Juin 1982

## Description

L'invention est relative à un procédé de moulage sous vide d'un panneau en matériau plastique, conformé dans un compartiment étanche destiné à être relié par une tubulure à une pompe à vide, et dans lequel,
- on utilise une peau de moulage flexible ayant une face à empreinte, agencée à l'intérieur du compartiment,
- avant de faire le vide, on incorpore dans le compartiment une matière plastique pâteuse en regard de l'empreinte,
- on fait ensuite le vide dans le compartiment pour presser la peau de moulage flexible sur la matière plastique, avec formation d'une surface moulée à sculptures et aspérités donnant un aspect granuleux.

L'obtention d'un panneau préfabriqué à surface plane ou gauche s'opère généralement an moyen d'un coffrage ou d'un moule de mise en forme, que l'on remplit d'une matière pâteuse à prise, par exemple du béton à base de ciment, ou d'un mélange de matériau synthétique à base de plastique avec une proportion déterminée de charges. La fabrication d'une gamme de panneaux, notamment pour la construction d'un mur d'escalade artificiel, nécessite une série importante de coffrages ou de moules destinés à obtenir un nombre important de profils. L'agencement de sculptures ou aspérités sur la face superficielle nécessite d'autre part une opération supplémentaire après remplissage du coffrage par la matière pâteuse. La mise en oeuvre de ce procédé est très onéreuse.

Le document US-A- 3616057 décrit un procédé de moulage utilisant la technique sous vide dans un compartiment étanche renfermant un moule fixe. La mise sous vide dans le compartiment applique un matériau pâteux contre la surface du moule. Après durcissement de la pâte, on obtient une surface moulée épousant la forme du moule. Une telle technique nécessite autant de moules fixes que de formes désirées pour les produits moulés.

Le document US-A- 4312829 se rapporte à une méthode de moulage utilisant le vide pour créer une cavité dans un moule. Après avoir fait le vide, la résine est ensuite injectée dans le moule au moyen d'une tubulure d'injection. La bonne répartition de la résine dans la cavité résulte du vide régnant dans la cavité. Le vide n'a aucune fonction de presse.

Le document GB-A- 1035360 fait usage d'une peau de moulage, mais l'élément conformateur est intégré dans le compartiment étanche, et est percé par une pluralité de trous communiquant avec la chambre à vide. Le durcissement de la couche de matière plastique s'effectue à l'intérieur du dispositif de moulage. On obtient ainsi un panneau ayant une forme conjuguée à celle de l'élément conformateur du moule. Une telle technique nécessite autant de moules que de formes désirées pour les panneaux.

L'objet de l'invention consiste à réaliser un procédé de moulage sous vide de panneaux à surfaces gauches sculptées et de formes quelconques.

Le procédé est caractérisé par les étapes additionnelles suivantes:
- enduire la face à empreinte de la peau de moulage au moyen d'une couche de matière plastique pâteuse tixotrope, ladite peau de moulage étant réalisée en un matériau organique souple anti-adhérent, notamment à base de silicone facilitant le démoulage de la surface après durcissement de la matière plastique,
- utiliser un sac déformable constitué par une paire de films étanches en matériau plastique souple, et introduire la peau de moulage enduite à l'intérieur du sac déformable,
- recouvrir la couche de matière plastique par une feuille perforée de faible épaisseur pour assurer une bonne répartition du vide à l'intérieur du sac,
- obturer le sac pour rendre étanche le compartiment entre les deux films, et appliquer le vide pour obtenir ladite surface moulée,
- positionner le sac déformable sous vide sur un élément conformateur de profil prédéterminé,
- laisser durcir la matière plastique lorsque le sac se trouve sur l'élément conformateur,
- et démouler la matière plastique de la peau de moulage pour obtenir un panneau de profil gauche sur l'une des faces.

Le tirage du vide à l'intérieur du sac agit comme une presse, et permet d'obtenir la structure granuleuse sur la face supérieure de la matière plastique pâteuse. Le sac sous vide est ensuite facilement transportable pour assurer la mise en forme du panneau, soit sur un élément conformateur, soit directement sur une structure de base à l'emplacement définitif du panneau. Le sac prend exactement la forme de l'élément conformateur ou de la structure, et reste dans cette position jusqu'au durcissement total de la matière plastique. Après démoulage, on obtient un panneau de profil gauche et à face moulée granuleuse.

La résistance mécanique du panneau peut être renforcée en disposant préablement un tissu de renfort à base de fibres de verre entre la couche de matière plastique et la feuille perforée.

La couche de matière plastique tixotrope est formée par un béton de résine composé à partir d'un mélange de charges et d'un liant organique, notamment à base de résine polyester ou époxyde, lesdites charges comprenant :
- des charges de structure à base de sable, de silice ou de quartz, dont la granulométrie varie de 0,1mm à 3mm,
- des fibres de grande résistance mécanique, notamment de verre, de carbone, ou de kevlar, représentant environ 10% à 20% du poids total des charges,
- et des charges creuses d'allègement, notamment des billes de verre expansé dont la granulométrie varie de 0,5mm à 1mm.

La présence des charges creuses d'allègement permet de diminuer le volume sable, ainsi que le poids total du panneau.

Selon un deuxième mode de mise en oeuvre du procédé, on effectue un surmoulage par impression sous vide de la surface d'un panneau composite. Le surmoulage est caractérisé en ce qu'on utilise un noyau de mousse de forme prédéterminée disposé en sandwich entre une paire de tissus de renfort à l'intérieur du compartiment étanche, qu'on enduit une couche de résine sur la face supérieure de l'un des tissus de renfort, accompagnée d'un saupoudrage de charges minérales, et que la peau de moulage souple est sollicitée en direction du noyau de mousse lors de la mise sous vide du compartiment pour provoquer un surmoulage par impression de la couche de résine, de manière à obtenir après durcissement un panneau composite stratifié ayant une face moulée en béton de résine. Le panneau est obtenu en une seule opération, et le surmoulage est facilité par la grande souplesse de la peau en silicone qui épouse parfaitement la forme spécifique du noyau en mousse. L 'élément conformateur extérieur n'est pas utilisé dans ce deuxième mode de mise en oeuvre. Le démoulage du panneau intervient après durcissement définitif de la résine.

D'autres avantages et caractéristiques ressortiront plus clairement de la description qui va suivre du procédé selon l'invention, donné à titre d'exemple non limitatif et représenté aux dessins annexés, dans lesquels:
- la figure 1 est une vue éclatée de la première mise en oeuvre du procédé de moulage sous vide par sac déformable;
- la figure 2 est une variante de la figure 1;
- la figure 3 représente le positionnement du sac sous vide de la figure 1 ou 2 sur un élémemt conformateur;
- la figure 4 montre le panneau après l'opération de démoulage;
- la figure 5 représente une vue au microscope du matériau plastique tixotrope;
- la figure 6 est une vue identique de la figure 1 de la deuxième mise en oeuvre du procédé.

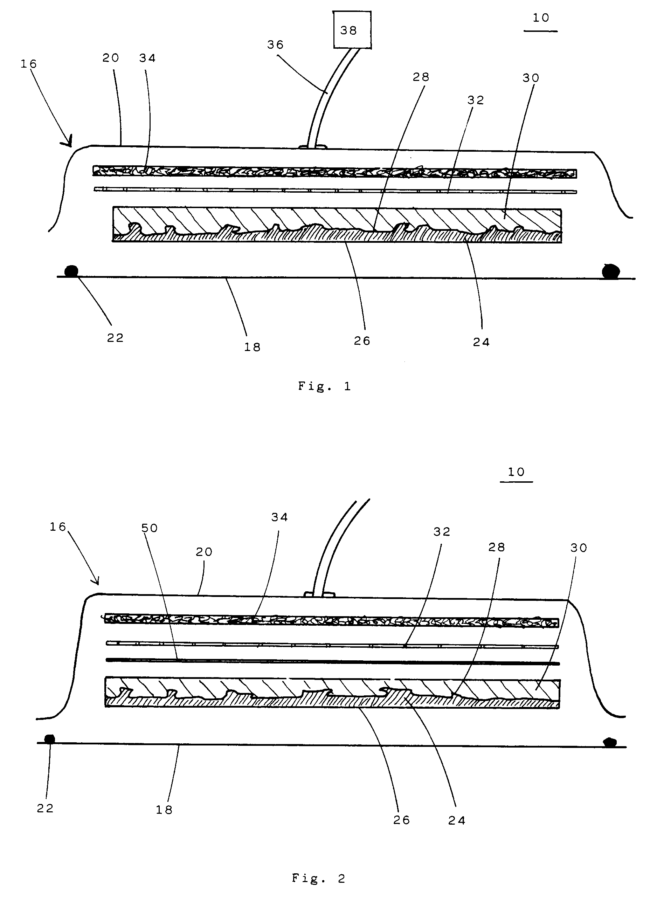

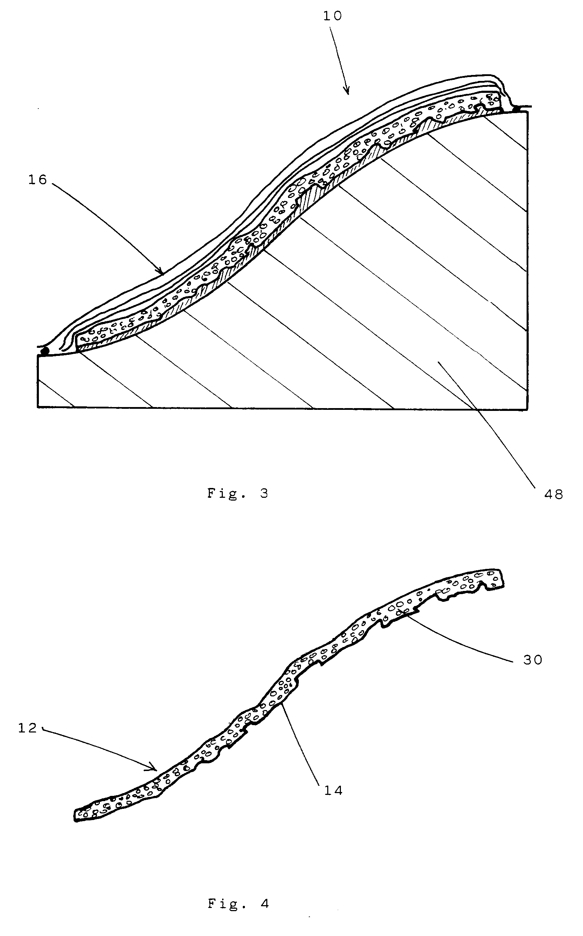

En référence aux figures 1 à 5, un dispositif de moulage 10 sous vide en sac sert à la fabrication de panneaux 12 à surfaces gauches de profils prédeterminés. Après démoulage, la face moulée 14 de chaque panneau 12 (fig.4) présente une pluralité de sculptures et aspérités réparties sur toute la surface, de manière à former soit une structure granuleuse décorative, soit une structure fonctionnelle à organes de prise utilisée notamment pour la construction d'un mur d'escalade artificiel.

Le sac 16 déformable du dispositif de moulage 10 sous vide est formé par une paire de films 18, 20 étanches en plastique souple destiné à venir en contact l'un avec l'autre dans la zone périphérique, avec interposition d'un joint 22 d'étanchéité. L'intérieur du sac 16 renferme une peau de moulage 24 flexible ayant une première face 26 plane applicable sur le film 18 inférieur, et une deuxième face 28 opposée à empreinte servant de support à la matière plastique 30 à mouler. La peau de moulage est réalisée en silicone, ou en tout autre matériau organique anti-adhérent facilitant le démoulage.

Une feuille perforée 32 en plastique de faible épaisseur recouvre la matière plastique 30 à l'opposé de la peau de moulage 24, pour assurer une bonne répartition du vide à l'intérieur du sac 16. Entre la feuille perforée 32 et le film supérieur 20 est inséré un matelas 34, ayant une épaisseur supérieure à celle de la feuille perforée 32, et réalisé en un matériau perméable, par exemple un feutre, destiné à autoriser l'échappement de l'air lors de l'application du vide.

Le tirage du vide dans le sac 16 s'effectue au moyen d'une tubulure 36 extérieure dont l'une des extrémités traverse à étanchéité le film supérieur 20 vers l'intérieur du sac 16, et dont l'autre extrémité est raccordée à une pompe à vide 38.

Le procédé de moulage sous vide dans le sac 16 impose l'utilisation d'un matériau plastique 30 pâteux tixotrope facilement applicable sur la deuxième face 28 de la peau de moulage 24, et restant en place en cas de déformation du sac 16. Le matériau plastique 30 est formé par un béton de résine composé par un mélange d'une pluralité de charges et d'un liant organique, notamment à base de résine polyester ou époxyde.

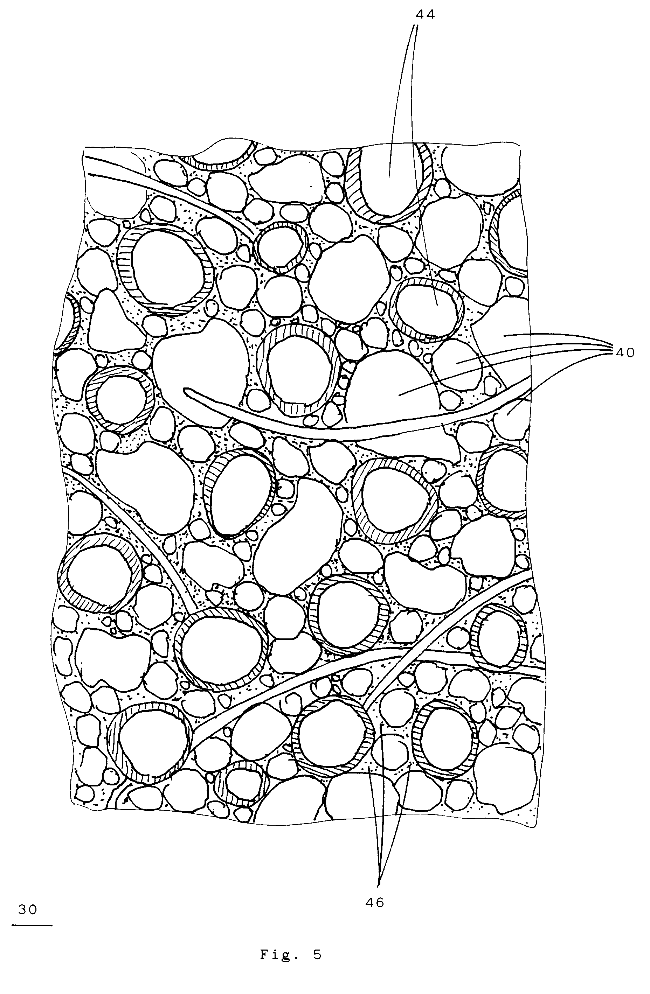

La composition de charges est la suivante (fig.5) :
- des charges de structure à base de sable 40, de silice ou quarts de différentes granulométries variant de 0,1mm à 3mm;
- des fibres 42 ou fils de grande résistance mécanique, notamment à base de verre, de carbone, ou de kevlar, ayant des longueurs prédéterminées comprises entre 5mm et 25mm, et représentant environ 10% à 20% du poids total des charges;
- des charges creuses d'allègement 44 comprenant des billes de verre expansé dont la granulométrie varie entre 0,5mm et 1mm, et représentant 10% à 15% du poids total des charges, et environ 25% à 40% du volume total des charges.

Après mélange, la résine 46 occupe les interstices ménagés entre les différentes charges 40, 42, 44 du matériau plastique 30. La présence des billes de verre expansé en tant que charges creuses d'allégement 44 permet d'utiliser moins de sable 40, entrainant une diminution notable en poids du panneau 12.

Une telle composition du mélange pâteux procure l'effet tixotrope du matériau 30 à béton de résine. Dans le cas d'une résine polyester, on ajoute un agent accélérateur et/ou un agent catalyseur pour favoriser la réaction par catalyse au bout d'un temps prédéterminé. Dans le cas d'une résine époxyde, on ajoute un agent durcisseur selon des proportions spécifiques au temps de prise souhaité.

La mise en oeuvre du procédé de moulage sous vide en sac est opérée de la manière suivante : Après avoir déposé la peau de moulage 24 sur le film inférieur 18, on enduit la deuxième face 28 à empreinte avec le matériau plastique 30 pour former une couche pâteuse d'épaisseur uniforme, laquelle peut être comprise entre 1cm et 5cm selon la nature du panneau 12. On recouvre ensuite la couche de matériau 30 au moyen de la feuille perforée 32, puis on met en place le matelas 34 et le film supérieur 20 positionné sur le joint d'étanchéité 22 pour former le sac 16. Le volume interne de ce dernier est alors étanche par rapport au milieu extérieur, et autorise la mise en service de la pompe à vide 38 engendrant une dépression importante à l'intérieur du sac 16.

L'effet de dépression interne provoque un rapprochement des deux films 18, 20 jusqu'à l'évacuation totale de l'air contenu dans le sac 16. La matière plastique 30 pâteuse épouse en permanence la deuxième face 28 de la peau de moulage 24 après disparition complète de bulles d'air. Le sac 16 déformable sous vide peut alors être disposé sur un élément conformateur 48 (fig. 3), dont la face supérieure de réception présente un profil spécifique permettant la reproduction de la surface gauche du panneau 12. Le sac 16 prend la forme de ce profil, et reste en contact contre la face supérieure du conformateur 48 jusqu'au durcissement total de la matière plastique 30.

Il suffit ensuite de démouler la matière plastique 30 durcie de la peau de moulage 24 en silicone, pour obtenir la surface gauche du panneau 12 (fig.4). La face moulée 14 du panneau 12 constitue la forme conjuguée de la peau de moulage 24, tandis que le profil gauche du panneau 12 résulte de la déformation du sac 16 en appui sur le conformateur 48.

Au lieu de poser le sac 16 sous vide sur un élément conformateur 48, il est également possible de le disposer à l'emplacement définitif du futur panneau 12, assurant ainsi une parfaite adaptation des formes.

Sur la figure 2, un tissu de renfort 50, notamment en fibres de verre, peut être intercalé entre la couche de matière plastique 30 et la feuille perforée 32 pour augmenter la résistance mécanique du panneau 12. Dans ce cas, le béton de résine est élaboré à partir d'une dose supérieure de liant. Au cours de la mise sous vide du sac 16, la résine traverse le tissu 50 de fibres de verre, lequel se déformera avec l'ensemble lors de la mise en place sur l'élément conformateur 48.

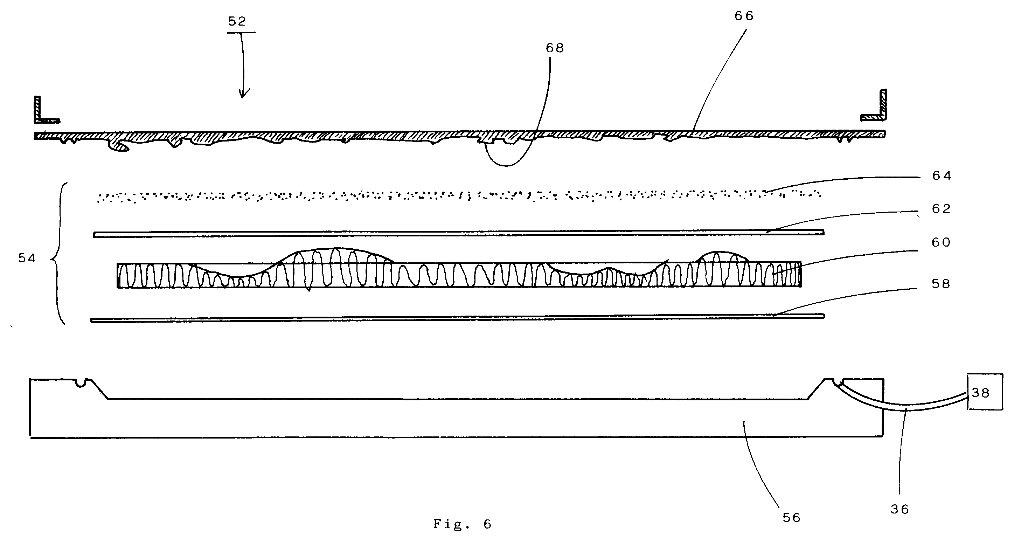

En référence à la figure 6, le dispositif de surmoulage 52 sous vide permet la fabrication de panneaux 54 stratifiés ayant une surface moulée présentant un aspect décoratif ou fonctionnel.

Le fond du dispositif de surmoulage 52 comporte un moule 56 rigide en forme de cuvette, dans laquelle on empile un premier tissu de renfort 58 en fibres de verre, un noyau de mousse 60 à base de polyuréthane ou de polyvinyle expansé, et un deuxième tissu de renfort 62 en fibres de verre. Une couche 64 de résine polyester ou époxyde est disposée sur la face supérieure du deuxième tissu de renfort 62, accompagnée d'un saupoudrage de charges minérales, notamment de sable à base de silice. Au dessus de la couche 64 est agencée une peau de moulage 66 en silicone ayant une face 68 à empreinte dont l'extrémité est destinée à coopérer à étanchéité avec la périphérie du moule 56 rigide, pour former un ensemble étanche. L'intérieur est branché par une tubulure 36 à une pompe à vide 38.

Au cours de la mise sous vide, la résine imprégne les tissus de renfort 58, 62, et remonte dans le sable de silice. La peau de moulage 66 est sollicitée en direction du moule 56 inférieur, de manière à obtenir en une seule opération un panneau 54 composite parfaitement stratifié avec une face moulée en béton de résine.

La grande souplesse de la peau 66 en silicone facilite le surmoulage par impression de la face supérieure du panneau 54.

La structure générale du panneau 54 dépend de la forme spécifique du noyau de mousse 60, et la surface surmoulée en béton de résine épouse parfaitement la forme du noyau 60.

Le durcissement de la résine s'effectue au bout d'un temps prédéterminé, autorisant le démoulage du panneau 54 rigide.

## Revendications

1. Procédé de moulage sous vide d'un panneau (12) en matériau plastique, conformé dans un compartiment étanche destiné à être relié par une tubulure (36) à une pompe à vide (30), et dans lequel,
- on utilise une peau de moulage (24) flexible ayant une face (28) à empreinte, agencée à l'intérieur du compartiment,
- avant de faire le vide, on incorpore dans le compartiment une matière plastique pâteuse en regard de l'empreinte,
- on fait ensuite le vide dans le compartiment pour presser la peau de moulage flexible sur la matière plastique, avec formation d'une surface moulée à sculptures et aspérités donnant un aspect granuleux,
caractérisé par les étapes additionnelles suivantes:
- enduire la face (28) à empreinte de la peau de moulage (24) au moyen d'une couche de matière plastique (30) pâteuse tixotrope, ladite peau de moulage étant réalisée en un matériau organique souple anti-adhérent, notamment à base de silicone facilitant le démoulage de la surface après durcissement de la matière plastique,
- utiliser un sac (16) déformable constitué par une paire de films (18,20) étanches en matériau plastique souple, et introduire la peau de moulage (24) enduite à l'intérieur du sac (16) déformable,
- recouvrir la couche de matière plastique (30) par une feuille perforée (32) de faible épaisseur pour assurer une bonne répartition du vide à l'intérieur du sac,
- obturer le sac (16) pour rendre étanche le compartiment entre les deux films, et appliquer le vide pour obtenir ladite surface moulée,
- positionner le sac (16) déformable sous vide sur un élément conformateur (48) de profil prédéterminé,
- laisser durcir la matière plastique lorsque le sac (16) se trouve sur l'élément conformateur,
- et démouler la matière plastique (30) de la peau de moulage (24) pour obtenir un panneau (12) de profil gauche sur l'une des faces (14).

2. Procédé de moulage selon la revendication 1, caractérisé en ce que la couche de matière plastique (30) tixotrope est formée par un béton de résine à partir d'un mélange de charges et d'un liant organique, notamment à base de résine polyester ou époxyde, lesdites charges comprenant:
- des charges de structure à base de sable (40) de silice ou de de quartz, dont la granulométrie varie de 0,1mm à 3mm,
- des fibres de grande résistance mécanique, notamment de verre, de carbone, ou de kevlar, représentant environ 10% à 20% du poids total des charges,
- et des charges creuses d'allègement (44), notamment des billes de verre expansé dont la granulométrie varie de 0,5mm à 1mm.

3. Procédé de moulage selon la revendication 2, caractérisé en ce que les charges d'allègement (44) représentent 10% à 15% du poids total des charges, et environ 25% à 40% du volume total des charges.

4. Procédé de moulage selon la revendication 2 ou 3, caractérisé en ce qu'on ajoute un agent accélérateur et/ou un agent catalyseur à la résine polyester pour favoriser la réaction par catalyse.

5. Procédé de moulage selon l'une des revendications 1 à 4, caractérisé en ce qu'un matelas (34) en matériau perméable est intercalé entre la feuille perforée (32) et le film supérieur (20) pour autoriser l'échappement de l'air lors de la mise sous vide du sac (16).

6. Procédé de moulage selon l'une des revendications 1 à 5, caractérisé en ce qu'un tissu de renfort (50), notamment de fibres de verre, est disposé entre la couche de matière plastique (30) et la feuille perforée (32) pour augmenter la résistance mécanique du panneau (12).

7. Procédé de moulage sous vide d'un panneau (54) en matériau plastique, conformé dans un compartiment étanche destiné à être relié par une tubulure (36) à une pompe à vide (30), et dans lequel,
- on utilise une peau de moulage (66) flexible ayant une face (68) à empreinte, agencée à l'intérieur du compartiment,
- avant de faire le vide, on incorpore dans le compartiment une matière plastique pâteuse en regard de l'empreinte,
- on fait ensuite le vide dans le compartiment pour presser la peau de moulage flexible sur la matière plastique, avec formation d'une surface moulée à sculptures et aspérités donnant un aspect granuleux,
caractérisé par les étapes additionneles suivantes:
- insérer un noyau de mousse (60) de forme prédéterminée entre une paire de tissus de renfort (58,62) à l'intérieur du compartiment étanche,
- enduire une couche de résine (64) sur la face supérieure de l'un (62) des tissus de renfort placé entre le noyau de mousse (60) et la peau de moulage (66),
- appliquer la face à empreinte (68) de la peau de moulage (66) souple sur le noyau de mousse (60), pour provoquer lors de la mise sous vide, un surmoulage par impression de la couche de résine,
- et laisser durcir la couche de résine pour obtenir un panneau (54) composite stratifié ayant une face moulée en béton de résine.

8. Panneau en matériau plastique, notamment pour la construction d'un mur d'escalade artificiel modulaire, caractérisé en ce qu'il comporte une surface gauche moulée au moyen du procédé mis en oeuvre selon l'une des revendications 1 à 7.

## Claims

1. A vacuum molding process of making a panel made of plastic material, formed in an airtight compartment designed to be linked by a tube (36) to a vacuum pump (30), and wherein:
- a flexible molding skin (24) is used, having an imprint face (28) arranged inside the compartment,
- before the vacuum is made, a pasty plastic material is incorporated in the compartment facing the imprint,
- a vacuum is then made in the compartment to press the flexible molding skin onto the plastic material, with formation of a molded surface with sculptures and asperities giving a granular appearance,
characterized by the following additional steps:
- applying a coating (30) of thixotropic pasty plastic material over the imprint face (28) of the molding skin (24), said molding skin being made of a flexible anti-adhesive organic material, notably silicone-based, to make it easy to remove the surface from the mold after the plastic marerial has hardened;
- using a deformable bag (16) formed by a pair of tight films (18, 20) made of flexible plastic material, and inserting the skin covered with said material inside the deformable bag;
- covering said coating (30) of pasty plastic material with a perforated strip (32) of small thickness to evently distribute the vacuum pressure inside the bag;
- closing the bag (16) for obtaining an airtight compartment between the two films, and applying a vacuum for obtaining said molded surface;
- placing the deformable vacuum bag (16) on a shaping support (48);
- hardening said hardenable plastic material when the bag (16) is located upon the shaping support,
- and removing the plastic material (30) from the molding skin (24), so as to obtain a panel (12) having a molded rough profile on one face (14).

2. A molding process according to Claim 1, characterized in that the thixotropic plastic material (30) is formed of resin concrete made up from a mixture of charges and a organic polyester or epoxy resin binder, said charges comprising:
- charges of sand (40), silica or quartz based structure, having a granulometry comprised between 0,1 mm to 3 mm;
- fibers of high mechanical strength, notably carbon, glass, or kevlar, representing about 10% to 20% of the total weight of the charges;
- and shaped lightening charges (44), comprising expanded glass balls having a granulometry comprised between 0,5 and 1 mm.

3. A molding process according to Claim 2, characterized in that the lightening charges (44) represent 10% to 15% of the total weight of the charges, and about 25% to 40% of the total volume of the charges.

4. A molding process according to Claim 2 or 3, characterized in that an accelerating or hardening agent is added to the polyester resin to enhance the reaction by catalysis.

5. A molding process according to one of the Claims 1 to 4, characterized in that a cushion (34) made of permeable material is inserted between said perforated strip (32) and the upper film (20) to allow the air to escape when the vacuum is created in the bag (16).

6. A molding process according to one of the Claims 1 to 5, characterized in that a strenghtening cloth (50), notably made of glass fibers, is inserted between the coating (30) of plastic material and the perforated strip (32) to increase the mechanical strength of the panel (12).

7. A vacuum molding process of making a panel made of plastic material formed in an airtight compartment, designed to be linked by a tube (36) to a vacuum pump (30), and wherein:
- a flexible molding skin (66) is used, having an imprint face (68) arranged inside the compartment,
- before the vacuum is made, a pasty plastic material is incorporated in the compartment facing the imprint,
- a vacuum is then made in the compartment to press the flexible molding skin onto the plastic material, with formation of a molded surface with sculptures and asperities giving a granular appearance,
characterized by the following additional steps:
- inserting a foam core (60) of predetermined shape between a pair of strengthening cloths (58, 62) inside the tight compartment;
- applying a coating of resin (64) over the upper face of one (62) of the strengthening cloth, located between the foam core (60) and the molding skin (66);
- applying the imprint face (68) of the flexible molding skin (66) over the foam core (60), so as to bring about overmolding by impression of the resin coating (64) when the vacuum is made,
- and hardening the resin coating for obtaining a stratified composite panel (54) with a molded face made of resin concrete.

8. A panel made of plastic material , notably for constructing a modular artificial climbing wall, characterized in that it comprises a rough surface molded by means of the process implemented according to one of the claims 1 to 7.

## Patentansprüche

1. Verfahren zum Vakuumgiessformen einer Platte (12) aus Kunststoff, in einem luftdichten Raum ausgebildet, der durch einen Rohransatz (36) mit einer Vakuumpumpe (30) verbunden ist, und in dem :
- eine flexible Giessform-Haut (26) mit einer Abdruckfläche (28) benutzt wird, die im Innern des Raumes angeordnet ist,
- bevor das Vakuum geschaffen wird, füllt man in den Raum gegenüber dem Abdruck einen pastenartigen Kunststoff ein,
- dann wird in dem Raum das Vakuum geschaffen, um die flexible Giessform-Haut auf den Kunststoff zu drücken, mit Bildung einer geformten Oberfläche mit Einkerbungen und Unebenheiten, die ein körniges Aussehen geben,
durch die folgenden zusätzlichen Etappen gekennzeichnet :
- die Abdruckfläche (28) der Formhaut (24) wird mit einer pastenartigen thixotropeKunststoffschicht (30) bestrichen, wobei die genannte Formhaut aus einem geschmeidigen organischen Antihaft-Material besteht, insbesondere aus Silikon, was die Oberflächenform-Abhebung nach Erhärtung des Kunststoffes erleichert,
- ein verformbarer Sack (16), der durch ein Paar dichter Folien (18, 20) aus geschmeidigem Kunststoff gebildet wird, wird verwendet, und die bestrichene Formhaut (24) wird in das Innere des verformbaren Sackes (16) eingeführt,
- die Kunststoffschicht (30) wird mit einem perforierten Blatt (32) von geringer Dicke bedeckt, um eine gute Verteilung des Vakuums im Innern des Sackes zu gewährleisten,
- der Sack (16) wird verschlossen, um den Raum zwischen den beiden Folien dicht zu machen, und das Vakuum wird geschaffen, um die genannte geformte Oberfläche zu erhalten,
- der verformbare luftleere Sack (16) wird auf einem anpassenden Element (48) von vorbestimmtem Profil angeordnet,
- man lässt den Kunststoff erhärten, wenn der Sack (16) sich auf dem anpassenden Element befindet,
- der Kunststoff (30) wird von der Form-Haut (24) abgehoben, um eine Platte (12) mit Linksprofil auf einer der Seiten (14) zu erhalten.

2. Formverfahren gemäss Anspruch 1, dadurch gekennzeichnet, dass die thixotrope Kunststoffschicht (30) aus einem Harzbeton gebildet ist, aus einer Mischung von Chargen und einem organischen Bindemittel, insbesondere aus Polyester- oder Epoxydharz, wobei die genannten Chargen aufweisen :
- Struktur-Chargen aus Silizium- oder Quartzsand (40), dessen Korngrösse von 0,1 mm bis 3 mm wechselt,
- Fasern von hoher mechanischer Festigkeit, insbesondere Glas-, Kohlen- oder Kevlarfasern, die ungefähr 10 % bis 20 % des Gesamtgewichtes der Chargen darstellen,
- und hohle Erleichterungs-Chargen (44), insbesondere Expand-Glaskugeln, deren Korngrösse von 0,5 mm bis 1 mm wechselt.

3. Formverfahren gemäss Anspruch 2, dadurch gekennzeichnet, dass die Erleichterungs-Chargen (44) 10% bis 15% des Gesamtgewichtes der Chargen betragen und ungefähr 25% bis 40% des Gesamtvolumens der Chargen darstellen.

4. Formverfahren gemäss Anspruch 2 oder 3, dadurch gekennzeichnet, dass man ein Beschleunigungs- und/oder Katalysator-Mittel aus Polyester-Harz hinzufügt, um die Reaktion durch Katalyse zu begünstigen.

5. Formverfahren gemäss einem der Ansprüche 1 bis 4, dadurch gekennzeichnet, dass eine Matraze (34) aus durchlässigem Material zwischen das perforierte Blatt (32) und die obere Folie (20) eingefügt ist, um die Evakuierung der Luft bei der Vakuumbildung im Sack (16) zu erlauben.

6. Formverfahren gemäss einem der Ansprüche 1 bis 5, dadurch gekennzeichnet, dass eine Verstärkungsschicht (50), insbesondere aus Glasfasern, zwischen der Kunststoffschicht (30) und dem perforierten Blatt (32) angeordnet ist, um die mechanische Festigkeit der Platte (12) zu erhöhen.

7. Verfahren zum Vakuumgiessformen einer Platte (54) aus Kunststoff, in einem luftdichten Raum ausgebildet, der durch einen Rohransatz (36) mit einer Vakuumpumpe (30) verbunden ist, und in dem :
- eine flexible Giessform-Haut (66) mit einer Abdruckfläche (68) benutzt wird, die im Innern des Raumes angeordnet ist,
- bevor das Vakuum geschaffen wird, fügt man in den Raum einen pastenartigen Kunststoff gegenüber dem Abdruck ein,
- dann wird in dem Raum das Vakuum geschaffen, um die flexible Giessform-Haut auf den Kunststoff zu drücken, mit Bildung einer geformten Oberfläche mit Einkerbungen und Unebenheiten, die ein körniges Aussehen geben,
durch folgende zusätzliche Etappen gekennzeichnet :
- ein Schaumkern (60) von vorbestimmter Form wird zwischen ein Paar Verstärkungsschichten (58, 62) im Innern des dichten Raumes eingefügt,
- die obere Seite einer der zwischen dem Schaumkern (60) und der Form-Haut (66) gelegenen Verstärkungsschichten (62) wird mit einer Harzschicht (64) bestrichen,
- die Abdruckfläche (68) der geschmeidigen Form-Haut (66) wird auf den Schaumkern (60) gedrückt, um bei der Vakuumschaffung eine Überform durch Druck der Harzschicht herbeizuführen,
- man lässt die Harzschicht erhärten, um eine schichtförmige Komposit-Platte (54) zu erhalten, die eine aus Harzbeton geformte Fläche aufweist.

8. Platte aus Kunststoff, insbesondere für die Herstellung einer künstlichen modularen Kletterwand, dadurch gekennzeichnet, dass sie eine linke geformte Oberfläche aufweist mittels eines Verfahrens gemäss einem der Ansprüche 1 bis 7.
